**Europäisches Patentamt**

**European Patent Office**

**Office européen des brevets**

(11) Veröffentlichungsnummer: **0 208 995**
**A1**

(12) # EUROPÄISCHE PATENTANMELDUNG

(21) Anmeldenummer: **86109022.3**

(22) Anmeldetag: **02.07.86**

(51) Int. Cl.⁴: **G01S 7/62** , **G01S 15/89** , **G10K 11/34**

(30) Priorität: **15.07.85 DE 3525179**

(43) Veröffentlichungstag der Anmeldung:
**21.01.87 Patentblatt 87/04**

(84) Benannte Vertragsstaaten:
**AT CH DE FR GB LI NL**

(71) Anmelder: **Siemens Aktiengesellschaft Berlin und München**
**Wittelsbacherplatz 2**
**D-8000 München 2(DE)**

(72) Erfinder: **Saugeon, Ulrich, Dipl.-Ing.**
**Weltenburger Strasse 175**
**D-8500 Nürnberg(DE)**

(54) **Verfahren und Gerät zur Ultraschall-Abtastung eines Objekts.**

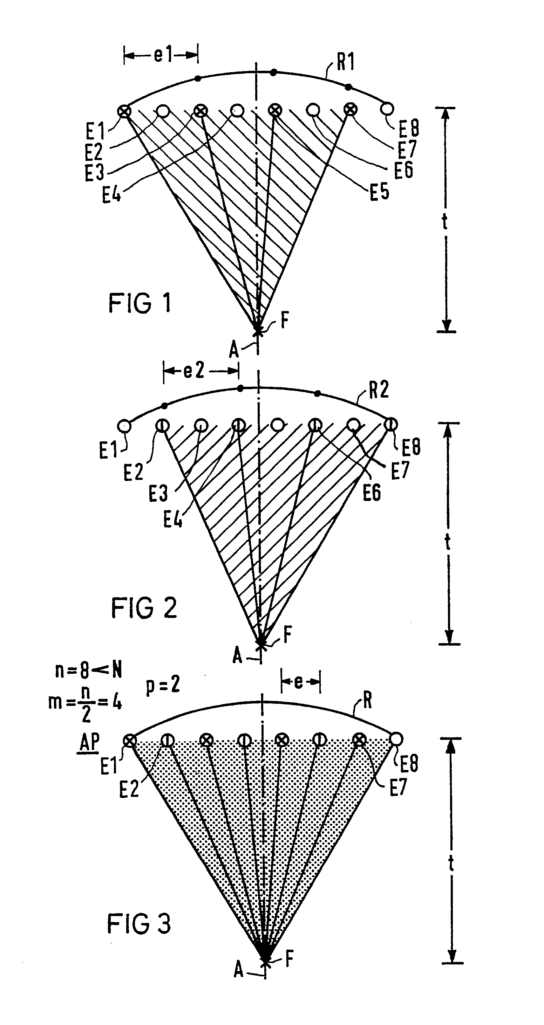

(57) Beim Empfang wird ein eine Anzahl (N) von nebeneinanderliegenden Übertragerelementen (e1, e2, ... eN) aufweisendes Ultraschall-Array verwendet. Dabei wird die jeweilige Empfangsapertur (AP) in - (p) einzelne Subarrays (z. B. E1, E3, E5, E7 und E2, E4, E6, E8 nach Fig. 1 bis 3) unterteilt. Jedes dieser Subarrays empfängt nach Aussenden eines ihm zugeordneten Ultraschall-Signals in das Objekt von diesem reflektierte Echosignale. Die von dem jeweiligen Subarray empfangenen Echosignale werden zu einem Summensignal (s1, s2) zusammengesetzt, und zwar so, daß die von einem gemeinsamen Fokuspunkt (F) reflektierten Echosignale aufsummiert werden. Zu diesem Zweck werden zumindest bei einigen der Übertragerelemente (e1, e2, ... eN) die abgegebenen Ausgangssignale zeitlich nach vorgegebenem Muster (R1, R2, R) verzögert. Dieses Vorgehen wird wiederholt entlang einer jeden Abtastzeile (A; I, II, III, ...) durchgeführt. Die sequentiell gewonnenen Summensignale (s1, s2) werden an jedem Punkt der Abtastzeile zu einem Empfangssignal (e) überlagert. Dieses wird mit den Empfangssignalen der anderen Punkte der Abtastzeile zur Bilddarstellung herangezogen. Bei diesem zeilenorientierten Verfahren können dieselben Verarbeitungskanäle (16) mehrfach, d.h. für jedes Subarray nacheinander, verwendet werden. Dies führt zu einer kostengünstigen Herstellung

FIG 1

FIG 3

## Verfahren und Gerät zur Ultraschall-Abtastung eines Objekts

Die Erfindung bezieht sich auf ein Verfahren zum Abtasten eines Objekts mittels Ultraschall, wobei beim Empfang ein eine Anzahl von nebeneinanderliegenden Übertragerelementen umfassendes Ultraschall-Array verwendet wird und wobei zumindest bei einigen der Übertragerelemente die beim Empfang von Echosignalen abgegebenen Ausgangssignale zeitlich verzögerbar sind. Die Erfindung bezieht sich weiterhin auf ein Ultraschallgerät zur Durchführung des Verfahrens. Bevorzugt handelt es sich dabei um ein Ultraschall-Abtastverfahren für ein Linear-, Trapez-oder Phased-Array-System, das auf dem medizinischen Sektor bei der Untersuchung von Patienten Anwendung findet und das zur Abbildung körperinterner Strukturen dient.

Bei Ultraschall-Diagnostik-Geräten, insbesondere Array-Geräten, wird die Bildqualität durch Fokussierung wesentlich verbessert. Bei einem - schwenkenden System, also z.B. bei einem sogenannten Phased-Array-System, müssen zusätzlich zur Fokussierung noch die zur Einstellung des Steuerwinkels benötigten langen Verzögerungszeiten mit hoher Präzision bereitgestellt werden. Zur Erzielung einer hohen Auflösung und zur gleichzeitigen weitgehenden Einschränkung oder sogar Vermeidung von Gitterkeulen ("grating lobes") muß die Empfangs-Verzögderungs-Einheit des Array-Systems eine Vielzahl paralleler Kanäle aufweisen, z.B. 64 bei einem Phased-Array-System. Solche Kanäle sind wegen der geforderten hohen Einstellgenauigkeit recht teuer.

Um also zu einem preiswerten Ultraschall-Abtastgerät zu gelangen, sollte die Anzahl der aktiven Verzögerungskanäle verringert werden.

Bei einem konventionellen Phased-Array-oder Linear-Array-System wird die Fokussierung auf einen festen Punkt in der Form vorgenommen, daß die Ausgangssignale sämtlicher Übertragerelemente der Apertur (z.B. N = 64) gleichzeitig aufsummiert werden. Der Vorteil dieses Verfahrens besteht darin, daß mit maximaler Bildfrequenz gearbeitet werden kann. Dies ist vor allem bei kardiologischen Anwendungen von großer Bedeutung, wo es auf eine hohe Signalverarbeitungsgeschwindigkeit ankommt. Bei Applikationen im abdominellen Bereich ist der Parameter "Auflösung" der entscheidende Faktor. Hier kann zugunsten der Auflösung ein gewisser Verlust an Bildfrequenz in Kauf genommen werden, da in der Regel nur langsam veränderliche Vorgänge abgebildet werden.

Aufgabe der vorliegenden Erfindung ist es, ein Verfahren der eingangs genannten Art anzugeben, bei dem sich durch Verringerung der aktiven Verzögerungskanäle ohne Verschlechterung der Auflösung, insbesondere der Bildqualität, eine preiswerte Realisationsmöglichkeit für ein Linear-oder ein Phased-Array-System ergibt. Es soll auch ein Gerät angegeben werden, mit dem sich ein solches Verfahren durchführen läßt.

Die Erfindung beruht auf der Überlegung, daß eine hohe Auflösung und damit eine gute Bildqualität auch durch Mehrfachausnutzung der in einem Ultraschall-Abtastgerät vorhandenen (teuren) Empfangs-Elektronik möglich ist, wodurch sich ein kostengünstiger Aufbau ergibt.

Diese Aufgabe wird bei einem Verfahren der eingangs genannten Art erfindungsgemäß dadurch gelöst, daß beim Empfang die jeweilige Empfangsapertur des Ultraschall-Arrays in einzelne Subarrays unterteilt wird, von denen jedes Subarray jeweils nach Aussenden eines Ultraschall-Sendesignals in das Objekt die einlaufenden Echosignale empfängt, daß die von den Subarrays empfangenen Echosignale jeweils zu einem Summensignal zusammengesetzt werden, das den von einem gemeinsamen Fokus reflektierten Echosignalen entspricht, und daß die sequentiell gewonnenen Summensignale zu einem Empfangssignal überlagert werden. Ein solches Empfangssignal kann dann in konventioneller Weise zur Darstellung gebracht werden.

Ein Ultraschallgerät zur Durchführung des genannten Verfahrens zeichnet sich erfindungsgemäß dadurch aus, daß es eine Einrichtung zur Aktivierung von verschiedenen Subarrays beim Abtasten ein und derselben Abtastzeile enthält.

Mit anderen Worten, die Empfangsapertur wird in einzelne Abschnitte oder Subarrays unterteilt, deren Summationsergebnis sequentiell überlagert wird. Dies kann beispielsweise erst nach Ablauf mehrerer Ultraschallzeilen geschehen. Dies Signalverarbeitungsverfahren ist für die Verzögerung zulässig, da es sich beim Fokussieren um einen linearen Vorgang handelt.

Der Vorteil des erfindungsgemäßen Verfahrens ergibt sich aus folgender Überlegung: Wie oben bereits erwähnt, wird bei konventionellen Array-Geräten die gewünschte Auflösung und damit die Aperturlänge durch eine vollständige, parallel arbeitende Verzögerungseinheit mit einer hohen Anzahl von Verzögerungs-Kanälen realisiert. Nach obigem Beispiel ist bei einem Phased-Array-System mit 64 Über tragungselementen eine Verzögerungseinheit mit 64 parallelen Verzögerungs-Kanälen vorgesehen. Infolge der hier erfindungsgemäß vorgeschlagenen Unterteilung der Empfangsapertur in zwei (oder mehr) Subarrays würden bei einem solchen Phased-Array-System dagegen nur 64/2 = 32 Verzögerungs-Kanäle (oder sogar noch weniger) benötigt werden.

Ausführungsbeispiele der Erfindung sind in neun Figuren dargestellt und werden im folgenden näher erläutert.

Es zeigen:

Fig. 1 bis 3 ein erstes Ausführungsbeispiel mit einer aus zwei ineinander verschachtelten Subarrays bestehenden Empfangsapertur, bei der zunächst das eine Subarray und dann das andere Subarray auf Empfang geschaltet ist, wobei sich nach Überlagerung ein Empfangssignal gemäß der wirksamen Gesamtapertur ergibt;

Fig. 4 bis 6 ein zweites Ausführungsbeispiel, bei dem zwei nebeneinanderliegende Subarrays verwendet werden;

Fig. 7 die Fokussierung auf verschiedene Tiefenlagen bei einer Ausführungsform gemäß Fig. 4 bis 6;

Fig. 8 die Weiterschaltung von Abtastzeilen I, II, III, ... bei einem linearen Array und

Fig. 9 eine Schaltungsanordnung zur Durchführung der in den Fig. 1 bis 3 oder 4 bis 6 dargestellten Ausführungsformen.

Eine erste Ausführungsform für die Ultraschall-Abtastung eines Objekts, insbesondere eines menschlichen Patienten, ist in den Fig. 1 bis 3 dargestellt. Die zur gewünschten Auflösung gerade benötigte Empfangsapertur AP (Fig. 3) umfaßt insgesamt $n = 8$ in einer Ebene nebeneinander liegende Ultraschall-Übertragerelemente, die mit E1, E2, ... E7, E8 bezeichnet sind. Insgesamt sind $N > n$ Ultraschallübertragerelemente vorhanden. Bei einem Phased-Array-Gerät kann die Zahl N beispielsweise $N = 64$ betragen. Von den N Übertragerelementen sind nur die $n = 8$ Übertragerelemente E1, ... E8 gezeigt, wobei n auch größer oder kleiner als 8 sein kann. Die dargestellte Empfangsapertur AP der Breite $n = 8$ ist eine Gruppe, die im Laufe der UltraschallAbtastung in bekannter Weise von links nach rechts auf dem gesamten Ultraschall-Array weiterwandert (Gruppenfortschaltung).

Nach Fig. 1 und 2 ist die Empfangsapertur (elektrisch) in zwei Subarrays zerlegt, die ineinander verschachtelt sind und nacheinander in unterschiedlichen Ultraschall-Empfangsphasen angesteuert werden. Das erste Subarray ergibt sich aus Fig. 1. Es enthält alle ungeradzahligen Aperturelemente E1, E3, E5 und E7. Das zweite Subarray ergibt sich aus Fig. 2 und enthält alle geradzahligen Aperturelemente E2, E4, E6 und E8. Zunächst wird das erste Subarray E1, E3, E5, E7 nach Fig. 1 aktiviert oder angesteuert. Das ist durch kleine Kreuzchen in den entsprechenden Element-Symbolen E1, E3, E5, E7 in Fig. 1 gekennzeichnet. Danach wird das zweite Subarray nach Fig. 2 aktiviert oder angesteuert. Das ist durch kleine Striche in den entsprechenden Element-Symbolen E2, E4, E6, E8 in Fig. 2 verdeutlicht. Die Aktivierung der Subarrays erfolgt also zeitlich nacheinander.

Jedes der beiden Subarrays wird nach den Fig. 1 und 2 mit einer eigenen Verzögerungsinformation beaufschlagt, die eine Fokussierung auf denselben Ort oder Fokuspunkt F in der Tiefe t, d.h. etwa in dieselbe Richtung oder Abtastzeile A wie die gesamte Empfangsapertur AP (vgl. Fig. 3), ermöglicht. Diese Verzögerungsinformation ist in den Fig. 1 und 2 in Form der Verzögerungskurven R1 bzw. R2 eingezeichnet. Bevorzugt haben beide Verzögerungskurven R1, R2 denselben Verlauf. Dabei beschreibt der Abstand der jeweiligen Verzögerungskurve R1, R2 von der Ebene der Übertragerelemente E1, E2 ... E8 die jeweilige Verzögerungszeit für das darunter befindliche Übertragerelement. Es ist ersichtlich, daß ein symmetrischer Verlauf der Verzögerungskurven R1, R2 gewählt ist. Die beiden äußeren Übertragerelemente E1 und E8 erfahren demgemäß beim Empfang keinerlei Verzögerung in der Ansteuerung, während die Verzögerung in der Ansteuerung der mittleren Übertragerelemente E4 bzw. E5 am größten ist.

Nach der Ausführungsform der Fig. 1 bis 3 sind insgesamt $p = 2$ ineinander geschachtelte Subarrays vorgesehen. Das hier aufgezeigte Verfahren ist auf $p = 2$ nicht beschränkt. Es können prinzipiell auch $p = 3, 4$ ... Subarrays vorgesehen sein.

In Fig. 3 ist dargestellt, welcher Strahlengang sich ergeben würde, wenn die in den Fig. 1 und 2 dargestellten Subarrays nicht sequentiell, sondern gleichzeitig arbeiten würden. Fig. 3 zeigt somit eine Überlagerung der vom ersten und zweiten Subarray gewonnenen Ergebnisse. Dabei ist zu beachten, daß infolge von $p = 2$ das Elementarraster e in Fig. 3 halb so lang ist wie bei den beiden Subarrays nach den Fig. 1 und 2, wo die Elementarraster e1 bzw. e2 eingetragen sind ($e1 = e2$).

Durch den doppelten Abstand $e1 = e2 = 2e$ der Übertragerelemente der beiden Subarrays nach Fig. 1 und 2 gegenüber dem resultierenden Array nach Fig. 3 können in der Richtcharakteristik der Subarrays zusätzliche Gitterkeulen (sogenannte "grating lobes") auftreten, auch wenn die Richtcharakteristik der resultierenden Empfangsapertur AP diese "grating lobes" nicht enthält. Dies ist beispielsweise der Fall, wenn das Elementarraster e der gesamten Apertur AP nach Fig. 3 genau 0,5 λ beträgt, wobei λ die Wellenlänge des empfangenen Ultraschalls ist, und wenn das Elementarraster e1 = e2 der Subarrays nach Fig. 1 und 2 genau 1,0 λ beträgt. Die "grating lobes" der beiden Subarrays entfallen jedoch bei einer Summation der beiden Subarrayinformationen zu einem Summensignal, da die Phasenlage dieser "grating lobes" in den beiden Subarrays um 180° phasenverschoben ist.

Um ein Empfangssignal zu erhalten, das zum Bildaufbau für die resultierende Apertur AP (vgl. Fig. 3) verwendet werden kann, wird jedes Ultraschall-Sendesignal ("Ultraschallvektor") p = 2 mal gesendet. Die Fokussierung und Richtung des Senders ist für jeden der beiden Ultraschallvektoren identisch und bezieht sich auf das resultierende Ultraschall-Array gemäß Fig. 3. Mit anderen Worten, es wird zunächst ein erstes Sendesignal entlang der vorgegebenen Abtastzeile A in das Objekt gesandt. Sodann werden mit dem ersten Subarray E1, E3, E5, E7, das infolge der Verzögerungszeiten nach Verzögerungskurve R1 auf die vorgegebene Tiefe t und den Fokuspunkt F eingestellt ist, die einlaufenden Echosignale empfangen und in einer - (nicht dargestellten) Verarbeitungsschaltung zu einem ersten Summensignal zusammengesetzt. Danach wird ein zweites Ultraschall-Sendesignal entlang derselben vorgegebenen Abtastzeile A in das Objekt gesandt. Anschließend werden mit dem zweiten Subarray gemäß Fig. 2, das ja verschieden ist von dem ersten Subarray gemäß Fig. 1, aber infolge seiner Verzögerungs kurve R2 ebenfalls auf die vorgegebene Tiefe t und den Fokuspunkt F gerichtet ist, die einlaufenden Echosignale empfangen. Diese werden in der bereits genannten Verarbeitungsschaltung zu einem zweiten Summensignal zusammengesetzt. Sodann werden zumindest das erste und das zweite Summensignal - (bei weiteren Subarrays können noch weitere Summensignale hinzutreten) einander überlagert. Dabei ergibt sich das gewünschte Empfangssignal für die vorgegebene Tiefe t, was dem resultierenden Ultraschall-Array nach Fig. 3 entspricht.

Bei dieser Art der Verarbeitung kann das Summensignal jedes der beiden Subarrays für die Dauer des gesamten Ultraschallvektors in einer Speichereinrichtung gespeichert werden. Nach Ablauf von zwei Ultraschallvektoren können dann die Summensignale der beiden Subarrays aufsummiert werden; das so gewonnene Summationsergebnis der resultierenden Apertur AP ist das gewünschte Empfangssignal.

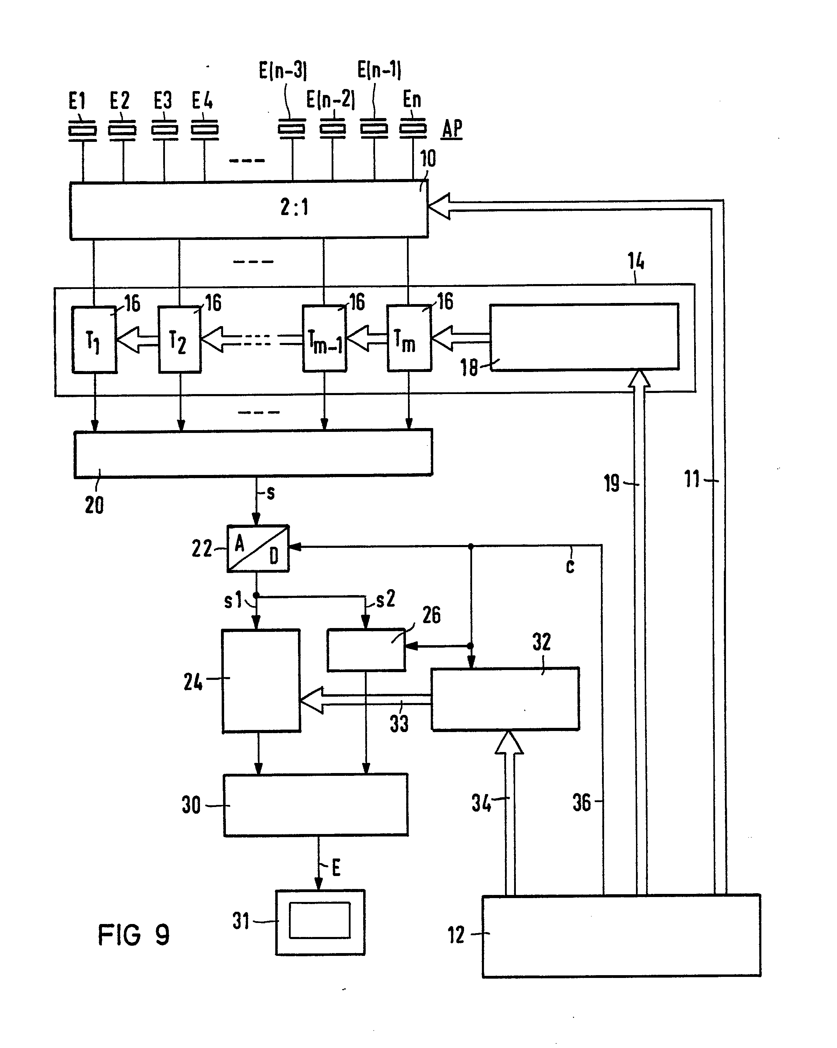

Diese Art der Signalverarbeitung, bei der einlaufende Summensignale für eine Abtastzeile A zweimal vollständig gespeichert werden, kann für manchen Anwendungsfall zu zeitintensiv sein. Eine zeitsparendere Vorgehensweise wird später anhand von Fig. 9 geschildert.

Hervorzuheben ist jedoch, daß für das erste Summensignal, das mittels des ersten Subarrays nach Fig. 1 gewonnen wird, und für das zweite Summensignal, das mittels des zweiten Subarrays nach Fig. 2 gewonnen wird, nacheinander dieselbe Verarbeitungseinheit, insbesondere dieselbe Verzögerungseinheit mit reduzierter Anzahl von Verzögerungs-Baugliedern oder -Kanälen verwendet werden kann.

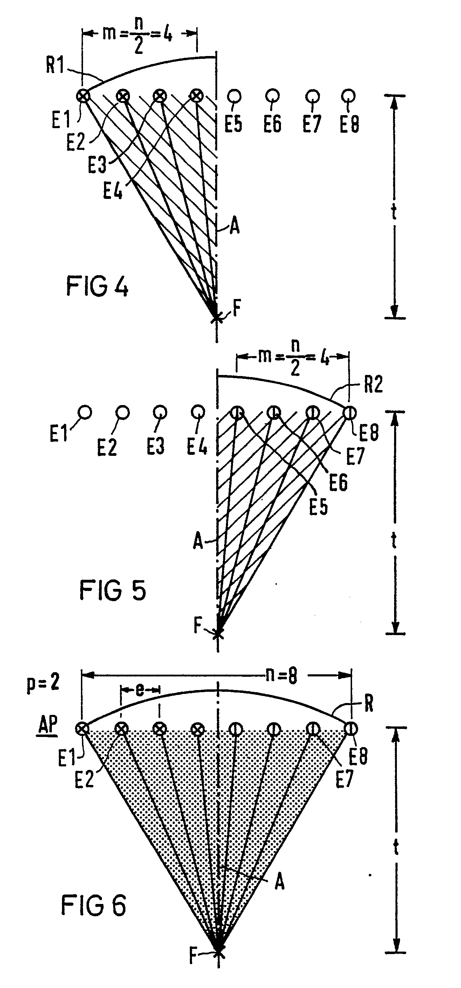

Eine zweite Ausführungsform zum Abtasten eines Objekts mittels Ultraschall ist in den Fig. 4 bis 6 (entsprechend Fig. 1 bis 3) dargestellt. Auch hier sind insgesamt n = 8 nebeneinander angeordnete Ultraschall-Übertragerelemente E1, E2, E3, ... E7, E8 vorgesehen. Die resultierende Apertur AP - (vgl. Fig. 6) entsteht hier aus zwei nebeneinanderliegenden Hälften. Die linke Hälfte enthält die Subarray-Elemente E1 bis E4, und die rechte Hälfte enthält die Subarray-Elemente E5 bis E8. Selbstverständlich kann die Anzahl n der Übertragerelemente E1, E2 ... auch ungleich 8 sein. Zunächst wird das erste Subarray gemäß Fig. 4 im Empfangsfalle angesteuert oder aktiviert und danach erst das zweite Subarray gemäß Fig. 5. Auch in diesem Fall wird jedes Subarray mit einer eigenen Verzögerungsinformation R1 bzw. R2 beaufschlagt, die eine Fokussierung auf denselben Ort, d.h. den Fokuspunkt F in der Tiefe t, und in dieselbe Richtung, d.h. nach Zusammensetzung zur gesamten Apertur AP in Richtung der Abtastzeile A, ermöglicht.

Man kann sagen, daß das resultierende Array in insgesamt p = 2 Subarrays zerlegt wurde. Diese Zerlegung der resultierenden Apertur AP in die zwei Subarrays hat zur Folge, daß sich die Auflösung jedes Subarrays um den Faktor 2 verschlechtert und daß eine Drehung der Richtcharakteristik der beiden Subarrays um einen von der Fokuslage F abhängigen Winkel auftritt. Dieser Winkel besitzt für die beiden Subarrays relativ zum resultierenden Array (vgl. Fig. 6) jeweils umgekehrtes Vorzeichen. D.h. für das Subarray nach Fig. 4 liegt er links, für das Subarray nach Fig. 5 liegt er rechts von der Richtung des resultierenden Arrays.

Auch in diesem Fall werden pro Abtastzeile A zwei Ultraschallvektoren gesendet. Durch Summation der danach jeweils abgespeicherten Empfangs-Informationen (resultierend aus diesen beiden Ultraschallvektoren und geliefert von den beiden Subarrays) ergibt sich auch hier das Empfangssignal des resultierenden Arrays. In diesem Fall können keine zusätzlichen "grating lobes" für die beiden Subarrays auftreten, da das Elementraster e für die Subarrays (Fig. 4 und 5) und für das resultierende Array (Fig. 6) gleich ist.

Auch in diesem Fall soll angemerkt werden, daß das letztlich gewünschte resultierende Array - (Apertur AP) nach Fig. 6 in mehr als p = 2 Subarrays unterteilt werden kann.

Es soll noch einmal festgehalten werden: Neben den beiden Ausführungsformen gemäß Fig. 1 bis 3 einerseits und Fig. 4 bis 6 andererseits, die eine Aufteilung der gesamten wirksamen Apertur AP in p = 2 Subarrays darstellen, ist prinzipiell auch eine Aufteilung in mehr als zwei Subarrays möglich. Für die Realisierung ist in diesem Fall ein Kompromiß zwischen erzielbarer Wirtschaftlichkeit durch Mehrfachausnutzung der Empfangselektronik bei reduzierter Kanalzahl und der daraus resultierenden niedrigeren Bildfrequenz erforderlich.

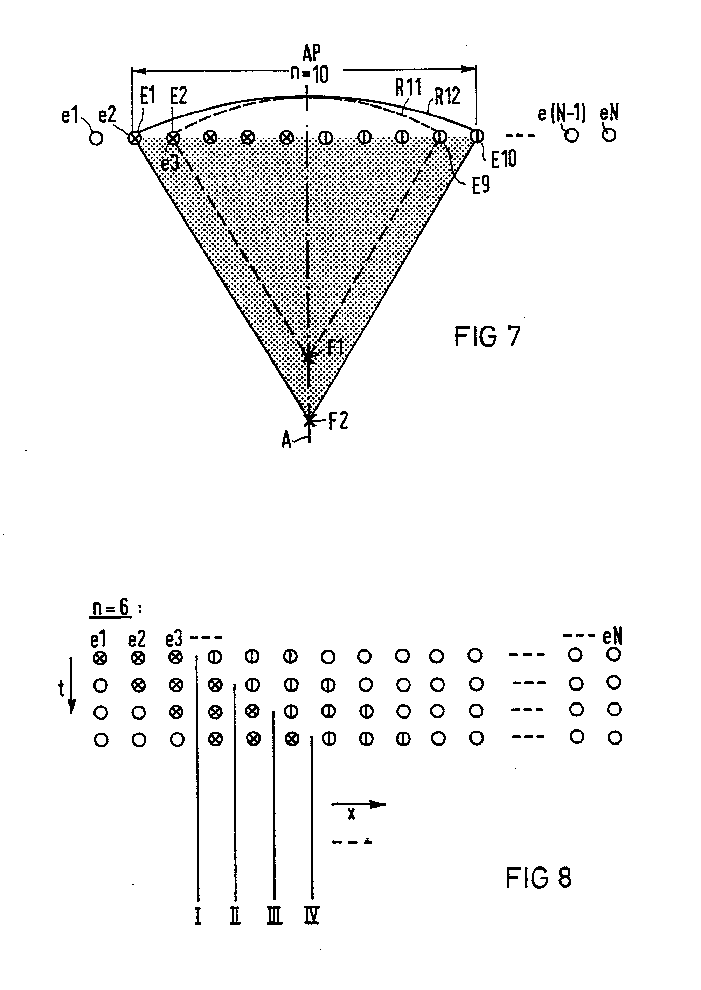

In Fig. 7 ist dargestellt, daß die wirksame Apertur AP bei Verwendung von n = 8 Übertragerelementen infolge der Verzögerungskurve R11 auf den ersten Fokuspunkt F1 eingestellt ist. Bei Fokussierung auf einen tiefer gelegenen zweiten Fokuspunkt F2 werden zweckmäßigerweise mehr Elemente herangezogen, im beispielsweise dargestellten Fall n = 10. Die Verzögerungskurve ist hier geändert; sie ist durch die Kurve R12 wiedergegeben. Ersichtlich läßt sich durch die Variation der wirksamen Breite n der Apertur AP eine Variation der Lage des Fokuspunktes F1, F2, ... ent lang einer Abtastzeile A herbeiführen. In Fig. 7 ist auch dargestellt, daß die n = 10 Übertragerelemente E1 bis E10 lediglich eine Gruppe der insgesamt vorhandenen Elemente e1, e2 ... e(N -1), eN des Ultraschall-Arrays darstellen.

In Fig. 8 ist schematisch dargestellt, in welcher Weise bei einem linearen Array eine Gruppenfortschaltung durchgeführt werden kann. Hier ist angenommen, daß N Ultraschall-Übertragerelemente e1, e2, ... eN vorhanden sind, von denen n = 6 die durchzuschaltende Gruppe E1 bis E6 bilden. Entsprechend Fig. 6 sind nach der ersten Zeile von Fig. 8 zunächst die Elemente e1, e2, e3 und danach die Elemente e4, e5, e6 beim Empfang aktiviert. Die Überlagerung der entsprechenden Summensignale führt zu einem Abtastpunkt auf der Abtastzeile I. Durch Fokusvariation kann die gesamte Zeile I abgetastet werden. Nach der zweiten Zeile von Fig. 8 sind sodann die Elemente e2, e3, e4 und danach die Elemente e5, e6, e7 aktiviert. Dies führt zu einer Abtastung eines Punktes entlang der Abtastzeile II. Auf diese Weise können viele Punkte entlang der Abtastzeile II abgetastet werden. Nach den Zeilen 3 und 4 wird entsprechend bei der Abtastung auf den Abtastzeilen III bzw. IV vorgegangen. Auf diese Weise ergibt sich eine Gruppenfortschaltung in Scan-Richtung x mit jeweiliger Abtastung der einzelnen Zeilen I, II, III, .... In jeder Zeile I, II, ... wird pro Abtastpunkt zweimal gesendet.

In Fig. 9 ist eine Ausführungsform eines Ultraschallgeräts zur Durchführung des Verfahrens nach Fig. 1 bis 3 mit p verschachtelten Subarrays oder des Verfahrens nach Fig. 4 bis 6 mit p nebeneinander angeordneten Subarrays dargestellt. Der Einfachheit halber sei wiederum p = 2.

Das Ultraschall-Array besitzt eine im Laufe der Zeit weitergeschaltete wirksame Gesamtapertur AP, die insgesamt n nebeneinanderliegende Ultraschall-Übertragerelemente E1, E2, E3, ... E(n -1), En umfaßt. Diese Übertragerelemente E1, E2, ... En sind an einen Multiplexer 10 angeschlossen, der jeweils eines von p = 2 Subarrays auswählt. Dies ist durch das Verhältnis "2 : 1" im Multiplexer 10 gekennzeichnet. Der Multiplexer 10 wird von einer zentralen Steuerungseinheit 12 beaufschlagt. Eine Anzahl von m = n/2 Ausgangsleitungen führt vom Multiplexer 10 zu einer Verzögerungseinheit 14. Diese Verzögerungseinheit 14 kann analog oder digital ausgeführt sein. Sie enthält entsprechend der Anzahl der Zuleitungen m = n/2 Verzögerungskanäle 16, die durch Verzögerungszeiten $T_1$, $T_2$, ... $T_{m-1}$, $T_m$ charakterisiert sind. Die gewählten Verzögerungszeiten $T_1$ ... $T_m$ sind einstellbar und entsprechen den Verzögerungskurven R1, R2, R der Fig. 1 bis 6. Bei den Verzögerungsgliedern 16 kann es sich beispielsweise um digitale Speicher, z. B. RAM-Speicher handeln. Die m Verzögerungs-Adress-Speicher werden durch eine Verzögerungs-Steuerungseinheit 18 angesteuert, die wiederum von der zentralen Steuerungseinheit 12 gesteuert ist, und zwar über einen Verzögerungs-Adreß-Bus 19.

Es ist also hervorzuheben, daß im vorliegenden Ausführungsbeispiel nicht n, sondern nur m = n/p Verzögerungskanäle 16 benötigt werden. Diese Verzögerungskanäle 16 werden für die Auswertung der Echosignale der insgesamt p vorhandenen Subarrays p mal nacheinander pro wirksamer Gesamtapertur AP verwendet.

Die Ausgangssignale der Verzögerungskanäle 16 werden einer Summationsstufe 20 zugeleitet, in der sie zu einem Summensignal s aufsummiert werden. Sofern die Summation analog vonstatten geht, wird dieses Summensignal s einem Analog-Digital-Wandler 22 zugeführt. Ein solcher A/D-Wandler könnte prinzipiell auch in den einzelnen Verzögerungskanälen 16 enthalten sein, so daß er an dieser Stelle entbehrlich wäre. Am Ausgang des Analog-Digital-Wandlers 22 wird nach Aussenden eines ersten Sendesignals ein erstes Summensignal s1 (von dem 1. Subarray) und nach Aussenden eines zweiten Sendesignals in dieselbe Richtung ein zweites Summensignal s2 (von dem 2. Subarray) empfangen. Jedes dieser Summensignale s1, s2 umfaßt nur ein einziges digitales Wort.

Der Ausgang des Analog-Digital-Wandlers 22 ist sowohl an einen Zeilen-oder Vektorspeicher 24 als auch an ein Register 26 angeschlossen. Bei dem Vektorspeicher 24 handelt es sich um einen Speicher, dessen Speicherlänge bei p = 2 genau einer Ultraschallzeile A nach Fig. 1 bis 7 (oder I, II, III, IV, ... in Fig. 8) entspricht. Der Vektorspeicher 24 kann also pro Ultraschallzeile z.B. 4000 Wörter abspeichern. Jedes Wort charakterisiert dabei Amplitude und Phase des HF-Signals s1, das von einem Ort entlang der Abtastzeile A bzw. I, II, III, ... gewonnen wurde. Bei p = 3 müssen im Vektorspeicher 24 dagegen (p -1) = 2 Ultraschallzeilen nebeneinander gespeichert werden; es ist also eine größere Speicherkapazität erforderlich. Das Register 26 dagegen ist aus Kostengründen nur zur Aufnahme eines einziges Wortes dimensioniert. Die Ausgänge des Vektorspeichers 24 und des Registers 26 sind an eine Summations-oder Überlagerungsstufe 30 angeschlossen, in der in an sich bekannten Weise eine wortweise Summation oder Überlagerung (nach Amplitude und Phase) erfolgt. Bei p = 3 zum Beispiel werden an jedem Ort entlang der Ul traschallabtastzeile ortsgetreu die Echosignale der ersten beiden Subarrays zu dem Echosignal des dritten Subarrays addiert. Das Ergebnis der Summation oder Überlagerung ist ein Empfangssignal E. Dieses entspricht dem noch nicht demodulierten HF-Empfangssignal eines konventionellen Ultraschall-Arraygeräts. Das Empfangssignal E wird in konventioneller Weise demoduliert, weiterverarbeitet (nicht dargestellt) und zur Abbildung auf einem Bildschirm 31 gebracht.

Es war bereits dargelegt worden, daß in der Summationsstufe 30 das im Register 26 gespeicherte Wort des Summensignals s2 einer Ultraschallzeile, das mit dem zweiten Subarray aufgenommen wurde, wortweise mit dem Inhalt des Vektorspeichers 24 verglichen wird. Dieser Vergleich geschieht so, daß das Summensignal s2 eines bestimmten Ortes dieser Ultraschallzeile mit der für denselben Ort der Ultraschallzeile ermittelten Information s1 aufsummiert wird. Sind mehr als zwei Subarrays vorhanden (p > 2), so ergeben sich insgesamt p Summensignale s1, s2, s3 ... sp, die hier aufsummiert werden. (p -1) dieser Summensignale s1, s2 ... sind dabei im Speicher 24 gespeichert.

Zur Steuerung des Vorgangs der Summation oder Überlagerung ist ein Schreib-, Lese-und Adressteuergerät 32 vorgesehen, das ausgangsseitig über einen Bus 33 an den Vektorspeicher 24 angeschlossen und selbst wiederum über einen Schreib-und Lese-Bus 34 eingangsseitig mit der zentralen Steuerungseinheit 12 verbunden ist. Das Schreib-, Lese-und Adressteuergerät 32 organisiert somit das Ein-und Auslesen in bzw. aus dem Vektorspeicher 24. Das Gerät 32 ist seinerseits noch mit einem Eingang an eine Ausgangsleitung 36 der zentralen Steuerungseinheit 12 angeschlossen, über welche Taktsignale c abgegeben werden. Diese Taktsignale c legen dabei die Wortfolge fest. Die Taktsignale c sind auch dem Analog-Digital-Wandler 22 und dem Register 26 zugeleitet.

Bei der Ausführungsform nach Fig. 9 wird davon ausgegangen, daß im Vektorspeicher 24 jeweils eine gesamte Ultraschallzeile gespeichert wird. Dadurch ergibt sich eine Reduzierung der Bildfolgefrequenz bei der Bilddarstellung um einen Faktor, der durch die Anzahl p der Subaperturen bestimmt ist. Für viele Anwendungsfälle ist eine solche Reduzierung der Bildfolgefrequenz gegenüber herkömmlichen Ultraschallgeräten akzeptabel. Das dargestellte Ultraschallgerät hat dafür den Vorzug, daß es kostengünstig ausgeführt werden kann.

Die Verarbeitung der von den Subarrays gemäß Fig. 1 bis 3 empfangenen Echosignale unterscheidet sich von der Verarbeitung der gemäß Fig. 4 bis 6 empfangenen Echosignale lediglich in der Einstellung oder Programmierung des Multiplexers 10 und der Verzögerungs-Steuereinheit 18. Das dargestellte Prinzip ist anwendbar auf den Linear-, Sektor-und Trapez-Scan. Wie aus Fig. 9 hervorgeht, kommt man dabei mit in der Ultraschall-Technik bewährten konventionellen Bauelementen aus.

Vorteil des beschriebenen zeilenorientierten Verfahrens gegenüber bildorientierten Überlagerungsverfahren, z. B. nach der (nachveröffentlichten) US-PS 4,553,437, ist eine geringere Empfindlichkeit gegenüber Bewegungsartefakten und die Verwendung eines kostengünstigen Speichers 24 mit vergleichsweise geringer Speicherkapazität.

## Ansprüche

1. Verfahren zum Abtasten eines Objekts mittels Ultraschall, wobei beim Empfang ein eine Anzahl (N) von nebeneinanderliegenden Übertragerelementen (e1, e2, ... eN) aufweisendes Ultraschall-Array verwendet wird und wobei zumindest bei einigen der Übertragerelemente (e1, e2, ... eN) die beim Empfang von Echosignalen abgegebenen Ausgangssignale zeitlich verzögerbar sind, **dadurch gekennzeichnet**, daß beim Empfang die jeweilige Empfangsapertur (AP) in eine Anzahl (p) einzelner Subarrays (z.B. E1, E3, E5, E7; E2, E4, E6, E8 nach Fig. 1, 2) unterteilt wird, von denen jedes Subarray jeweils nach Aussenden eines Ultraschall-Sendesignals in das Objekt die einlaufenden Echosignale empfängt, daß die von den Subarrays empfangenen Echosignale jeweils zu einem Summensignal (s1, s2) zusammengesetzt werden, das den von einem gemeinsamen Fokuspunkt (F) reflektierten Echosignalen entspricht, und daß die so sequentiell von den Subarrays gewonnenen Summensignale (s1, s2) zu einem Empfangssignal (e) überlagert werden, das für eine Bild-Darstellung vorgesehen ist.

2. Verfahren nach Anspruch 1, **dadurch gekennzeichnet** , daß es folgende Schritte umfaßt:

a) es wird ein erstes Ultraschall-Sendesignal entlang der vorgegebenen Abtastrichtung (A) in das zu untersuchende Objekt gesandt,

b) mit einem ersten Subarray (z.B. E1, E3, E5, E7) der Empfangsapertur (AP), das eine vorgegebene Breite (z.B. n/2) besitzt und auf den Fokus - (F) in der vorgegebenen Tiefe (t) gerichtet ist, werden die einlaufenden Echosignale empfangen und in einer Verarbeitungsschaltung (16, 18, 20) zu einem ersten Summensignal (s1) zusammengesetzt,

c) es wird danach ein zweites Ultraschall-Sendesignal entlang derselben vorgegebenen Abtastrichtung (A) in das zu untersuchende Objekt gesandt,

d) mit einem zweiten Subarray (z.B. E2, E4, E6, E8) der Empfangsapertur (AP), das verschieden ist vom ersten Subarray (E1, E3, E5, E7), das eine vorgegebene Breite (z.B. n/2) besitzt und ebenfalls auf den Fokus (F) in der vorgegebenen Tiefe (t) gerichtet ist, werden die einlaufenden, vom zweiten Ultraschall-Sendesignal ausgelösten Echosignale empfangen und in derselben Verarbeitungsschaltung (16, 18, 20) zu einem zweiten Summensignal (s2) zusammengesetzt, und

e) zumindest das erste und das zweite Summensignal (s1, s2) werden einander zu dem Empfangssignal (e) überlagert.

3. Verfahren nach Anspruch 2, **dadurch gekennzeichnet**, daß eine Vielzahl aus unterschiedlichen Tiefen (t) gewonnener erster Summensignale (s1) gespeichert wird, und daß danach diese ersten Summensignale (s1) jeweils mit einer Vielzahl nacheinander einlaufender, für dieselben unterschiedlichen Tiefen (t) gewonnener zweiter Summensignale (s2) zu einer entsprechenden Vielzahl von Empfangssignalen (e) überlagert werden, wobei diese Empfangssignale (e) nicht-demodulierte HF-Empfangssignale entlang einer Ultraschallzeile in der vorgegebenen Abtastrichtung (A; I, II, III ...) sind (Fig. 9).

4. Verfahren nach einem der Ansprüche 1 bis 3, **dadurch gekennzeichnet** , daß das Empfangssignal (e) in an sich bekannter Weise verarbeitet und zur Abbildung gebracht wird.

5. Verfahren nach einem der Ansprüche 1 bis 4, **dadurch gekennzeichnet** , daß die Unterteilung des Ultraschall-Arrays in ineinandergeschaltete Subarrays (E1, E3, E5, E7; E2, E4, E6, E8) erfolgt (Fig. 1 bis 3).

6. Verfahren nach einem der Ansprüche 1 bis 4, **dadurch gekennzeichnet** , daß die Unterteilung des Ultraschall-Arrays in nebeneinanderliegende Subarrays (E1 bis E4; E5 bis E8) erfolgt - (Fig. 4 bis 6).

7. Verfahren nach einem der Ansprüche 1 bis 6, **dadurch gekennzeichnet** , daß die Gesamtzahl (N) der Übertragerelemente (e1, e2, ... eN) in eine Anzahl (p) gleich großer Subarrays unterteilt ist.

8. Verfahren nach Anspruch 7, **dadurch gekennzeichnet**, daß die Anzahl (p) gleich 2 ist.

9. Verfahren nach einem der Ansprüche 1 bis 8, **dadurch gekennzeichnet** , daß zur Fokussierung auf unterschiedliche Tiefen (t) die Breite (n) der Empfangsapertur (AP) geändert wird (Fig. 7).

10. Verfahren nach einem der Ansprüche 1 bis 9, **dadurch gekennzeichnet** , daß zur Abtastung in Scanrichtung (x) eine Gruppenfortschaltung vorgenommen wird, wobei in jeder Abtastrichtung (A; I, II, III, ...) mindestens zweimal gesendet wird (Fig. 8).

11. Ultraschallgerät zur Durchführung des Verfahrens nach einem der Ansprüche 1 bis 10, **dadurch gekennzeichnet**, daß es eine Einrichtung (10, 12) zur sequentiellen Aktivierung von verschiedenen Subarrays (z.B. E1 bis E4; E5 bis E8) beim Abtasten ein und derselben Abtastrichtung (A; I, II, III, ...) besitzt.

12. Ultraschallgerät nach Anspruch 11, **dadurch gekennzeichnet**, daß die Einrichtung - (10, 12) zur sequentiellen Aktivierung einen Multiplexer (10) enthält, der an die Übertragerelemente - (E1 bis En) des Ultraschall-Applikators angeschlossen und von einer zentralen Steuerungseinheit (12) gesteuert ist.

13. Ultraschallgerät nach Anspruch 11 oder 12, **dadurch gekennzeichnet**, daß eine Anzahl (m) von Verzögerungskanälen (16) eingangsseitig an die Einrichtung (10, 12) zur Aktivierung und ausgangsseitig an eine erste Summationsstufe (20) angeschlossen ist, wobei die Anzahl (m) der Verzögerungskanäle (16) bedeutend kleiner ist als die Gesamtzahl (N) der Übertragerelemente (e1 bis eN) des Ultraschall-Arrays.

14. Ultraschallgerät nach einem der Ansprüche 1 bis 13, **dadurch gekennzeichnet** , daß zur Überlagerung der Summensignale (s1, s2) eine zweite Summationsstufe (30) vorgesehen ist, der ein auf ein erstes Subarray zurückgehendes erstes Summensignal (s1) über einen Speicher (24) und ein auf ein zweites Subarray zurückgehendes zweites Summensignal (s2) über ein Register (26) zugeführt sind, wobei die zweite Summationsstufe - (30) Empfangssignale (e) abgibt.

15. Ultraschallgerät nach einem der Ansprüche 11 bis 14, **dadurch gekennzeichnet** , daß der Speicher (24) und das Register (26) digital ausgelegt sind, und daß der Speicher (24) zur Speicherung einer Zahl vollständiger Ultraschallzeilen bemessen ist, wobei diese Zahl mindestens 1 beträgt, aber viel geringer ist als die Anzahl der Ultraschallzeilen eines vollständigen Ultraschallbildes.

16. Ultraschallgerät nach einem der Ansprüche 11 bis 15, **dadurch gekennzeichnet** , daß das Empfangssignal (e) nach Signalverarbeitung einem Darstellungsgerät (31) zugeführt ist.

17. Ultraschallgerät nach Anspruch 15, **dadurch gekennzeichnet**, daß der Speicher (24) zur Speicherung einer Zahl von (p -1) Ultraschallzeilen (A; I, II, III ...) ausgelegt ist, wobei p die Anzahl der Subarrays ist.

FIG 1

FIG 2

FIG 3

FIG 4

FIG 5

FIG 6

FIG 7

FIG 8

FIG 9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | WO-A-8 500 889 (LUTHRA et al.) <br> * Zusammenfassung; Seite 3, Zeile 33 - Seite 5, Zeile 22; Seite 8, Zeile 20 - Seite 11, Zeile 31; Seite 12, Zeilen 13-36; Anspruch 3 * <br><br> --- | 1-17 | G 01 S 7/62 <br> G 01 S 15/89 <br> G 10 K 11/34 |
| P,X | WO-A-8 503 354 (LUTHRA et al.) <br> * Zusammenfassung; Seite 3, Zeilen 9-17; Seite 3, Zeile 23 - Seite 4, Zeile 32; Seite 5, Zeile 19 - Seite 10, Zeile 17; Ansprüche * <br><br> --- | 1-17 | |
| A | US-A-4 505 156 (QUESTO) <br><br> * Zusammenfassung; Figuren 4-6; Spalte 1, Zeile 47 - Spalte 2, Zeile 10; Spalte 3, Zeilen 3-18; Spalte 3, Zeile 29 - Spalte 5, Zeile 58; Ansprüche * <br><br> --- | 1,4-7, 11-16 | |
| A | DE-A-2 834 284 (ANVAR) <br><br> * Seite 18, Zeile 14 - Seite 22, Zeile 30; Figuren 7,8 * <br><br> --- | 1,4,11 ,16 | |
| A | DE-A-3 121 513 (SRI INTERNATIONAL) <br><br> * Zusammenfassung; Seite 15, Zeile 31 - Seite 22, Zeile 14 * <br><br> --- -/- | 1,9,11 -13,15 ,16 | |

RECHERCHIERTE SACHGEBIETE (Int. Cl.4)

G 01 S
G 10 K

Der vorliegende Recherchenbericht wurde für alle Patentansprüche erstellt.

| Recherchenort | Abschlußdatum der Recherche | Prüfer |
|---|---|---|
| DEN HAAG | 08-10-1986 | OLDROYD D.L. |

## EUROPÄISCHER RECHERCHENBERICHT

Europäisches
Patentamt

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-3 810 082 (ARENS)<br><br>* Insgesamt *<br><br>--- | 1,4,7, 11,16, 17 | |
| A | US-A-4 247 900 (MARTIN et al.)<br><br>* Zusammenfassung *<br><br>--- | 1,4,7, 11,16, 17 | |
| A | US-A-4 254 662 (KURODA et al.)<br><br>* Spalte 2, Zeile 23 - Spalte 4, Zeile 65 *<br><br>--- | 1,4,7, 11,16 | |
| A | US-A-4 252 026 (ROBINSON)<br><br>* Spalte 2, Zeile 62 - Spalte 5, Zeile 65 *<br><br>----- | 1,4,7, 11,16 | RECHERCHIERTE SACHGEBIETE (Int. Cl.4) |

Der vorliegende Recherchenbericht wurde für alle Patentansprüche erstellt.

| Recherchenort | Abschlußdatum der Recherche | Prüfer |
|---|---|---|
| DEN HAAG | 08-10-1986 | OLDROYD D.L. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82